# EUROPÄISCHE PATENTANMELDUNG

(11) **EP 0 695 720 A1**
(43) Veröffentlichungstag der Anmeldung: **07.02.1996**
(21) Anmeldenummer: 95250190.6
(22) Anmeldetag: 02.08.1995
(51) Int. Cl.: C02F 3/00, C02F 3/30, G05D 21/02

(54) **Verfahren für die Überwachung und Steuerung von Anlagen zur biologischen Behandlung von Abwässern**

(30) Priorität: 02.08.1994 IT BL940022
(71) Anmelder: WATERPLAN S.p.A., I-32100 Belluno (IT)
(72) Erfinder: Ghiribelli, Paolo, I-20126 Milano (IT); Ravalli, Marco, I-20126 Milano (IT)
(74) Vertreter: Wablat, Wolfgang, Dr.Dr.

(57) **Zusammenfassung**

Auf Grund der vorliegenden Erfindung wird eine neues Verfahren für die Überwachung und die Steuerung von städtischen und industriellen Abwässern geschaffen, aufgrund dessen es möglich ist, die gleichzeitige Ausscheidung des kohlenstoffhaltigen Substrates, der bioabbaubaren Stickstoff-Formen und des löslichen Phosphors in einem einzigen Becken durchzuführen, wo diese in verschiedenen Konzentrationen vorhanden sein können.

Das wesentliche Merkmal der Erfindung besteht beim vorliegenden Verfahren für die Steuerung in der Wahl der chemisch-physikalischen Bezugsparameter, mittels des Einsatzes zweckmäßiger Geräte, wie: Temperatur (1) - Redoxpotential (2) - pH-Wert (3) - gelöster Sauerstoff (4) - CSB-Abfluß (5) - Trübung (6) - Meßgerät für N-NO3 (7) - Meßgerät für N-NH4 (8) - und in der Bestimmung des Verhältnisses dieser Parameter und der Qualität des Abflusses, für die Steuerung der Zeitdauer der Phasen bei den verschiedenen Konzentrationen von Sauerstoff, der dem einzigen Becken 10 zugeführt werden soll, indem die Daten von einem Computer 10 ausgewertet werden.

## Beschreibung

Die vorliegende Erfindung betrifft ein neues Verfahren oder System für die Überwachung und Steuerung der städtischen und industriellen Abwässer, aufgrund dessen es möglich ist, gleichzeitig und in einem einzigen Becken das kohlenstoffhaltige Substrat, die biologisch abbaubaren, stickstoffhaltigen Stoffe und den löslichen Phosphor auszuscheiden, die in den unterschiedlichsten Konzentrationen vorhanden sein können.

Das grundsätzliche Merkmal des vorliegenden Kontrollsystems besteht in der Festlegung der chemisch-physikalischen Bezugsparameter, wie des Redoxpotentials, des pH-Wertes, des gelösten Sauerstoffes, der Trübung und des Nitrat-Stickstoffes, mit der Bestimmung des Verhältnisses dieser Parameter und der Qualität des Abflusses, für die Steuerung der Dauer der Phasen unterschiedlicher Sauerstoffkonzentration.

Man kennt bereits viele Systeme oder Verfahren für die Behandlung von städtischen und industriellen Abwässern welche in der Lage sind, das kohlenstoffhaltige Substrat, den Stickstoff und den Phosphor auszuscheiden, sowie die Synthese der heterotrophen und der autotrophen Bakterien zu verwirklichen. Diese Vorgänge geschehen gemäß einem bekannten mathematischen Modell, welches ein mikrobiologisches Verfahren ermittelt hat, das sich in einer aeroben, einer anoxischen und einer anaeroben Phase abspielt, in welchen sich Reaktionen ergeben, die von heterotrophen und autotrophen Bakterien an einem Substrat durchgeführt werden, das aus löslichen kohlenstoffhaltigen organischen Substanzen und Partikeln, ammoniakalischem Stickstoff, löslichem organischem Stickstoff und Partikeln, organischen und anorganischen Phosphaten, Nitriten und Nitraten, sowie Alkali besteht.

Gemäß dem oben genannten mathematischen Modell erfolgt im Gesamtschema des Verfahrens eine große Anzahl von Reaktionen unter aeroben, anaeroben und anoxischen Verhältnissen, die sich zu unterschiedlichen Zeiten und in unterschiedlichen Zuständen abspielen, in ebensovielen entsprechenden Becken mit unterschiedlichen Oxigenierungsgraden, die nacheinander angeordnet sind.

Die Leitung dieser Anlagen muß notwendigerweise hochspezialisierten Personen anvertraut werden, welche gute Kenntnisse der mikrobiologischen Vorgänge haben, die mit den verschiedenen Phasen und den Regelungsproblemen zusammenhängen.

Es wurde auch schon das Thema der Überwachung einiger chemischer und physikalischer Parameter angeschnitten und es wurde für den Übergang zum nächsten Becken und zur nächsten Phase die Trübung als Grundlage für die Bestimmung der Dauer der verschiedenen Phasen mit verschiedenen Sauerstoffkonzentrationen verwendet. Diese nur auf die Trübung abgestellte Überwachung erlaubt keine auf die Gegenüberstellung der verschiedenen zu steuernden Belastungen abgestimmte Aufzeichnung der verschiedenen Vorgänge, so daß diese Situationen immer wieder aufgrund der Erfahrung des Bedienungspersonals beherrscht werden müssen.

Außerdem bewirkt in den gegenwärtigen Anlagen die ständige Bezugnahme auf den Oxigenierungsgrad in jeder einzelnen Phase die Tatsache, daß man in jedem Becken der Anlage Turbulenzen hat, die Übersättigungserscheinungen an flüchtigen, fauligriechenden Substanzen zur Folge haben.

Die gegenwärtigen Anlagen, die auf die Behandlung in verschiedenen Phasen mit verschiedenen Klärbecken abgestellt sind, haben sehr hohe Kosten für die Herstellung der Becken und ihre Verbindung zueinander, für den Unterhalt und die ausgedehnten Bauflächen, so daß es oft vorkommt, daß man auf die Klärung der städtischen und industriellen Abwässer verzichtet, wenn man diese hohen Kosten nicht verkraften kann.

Die Beschickung der Abwässer in die verschiedenen Becken, sowie die ständige Zuführung von Sauerstoff, wenn auch in abgestuften Mengen, erfordert in den gegenwärtigen Anlagen einen beträchtlichen Energieverbrauch.

Vorrangiger Zweck des neuen Überwachungssystems ist die Möglichkeit, jede Phase des Vorgehens bei der Behandlung der Abwässer zu messen, zu vergleichen und zu steuern, mit einer Erfassung, welche sich auf alle wichtigen Faktoren bezieht, welche die ausschlaggebenden mikrobiologischen Phasen, insbesondere durch die Messung des Redoxpotentials, und die aeroben, anoxischen und anaeroben Prozesse betreffen, mit den relativen chemischphysikalischen Parametern, wobei die jeweils richtige Zeitdauer jeder einzelnen Phase festgelegt wird.

Ein weiterer Zweck des vorliegenden Verfahrens ist die Vereinfachung im Bau der Kläranlagen, indem die verschiedenen Klärbecken für jede Behandlungsphase mit ihren Verbindungen zueinander weggelassen werden können, was die Größenausmaße, die Herstellungs- und Unterhaltskosten herabsetzt, so daß alle Gemeinschaften oder Betriebe, die Abwässer erzeugen, von Kläranlagen Gebrauch machen können.

Noch ein weiterer Zweck der Erfindung ist die Herabsetzung der menschlichen Tätigkeit in der Steuerung der verschiedenen Phasen auf ein Minimum, womit die Notwendigkeit der Anwesenheit hochqualifizierten Personals für die Überwachung der Betriebsphasen, die systematisch kontrolliert, ausgearbeitet und angeordnet werden, entfällt.

Ein weiterer Zweck der Erfindung ist es, die gasförmigen Aussonderungen auf ein Minimum herabzusetzen, indem die Kontaktfläche Wasser/Luft herabgesetzt und die Oxigenierung in den anaeroben und anoxischen Phasen an derselben Oberfläche vermieden werden.

Ein weiterer Zweck des neuen Verfahrens ist es, den Energieverbrauch weitestgehend in Grenzen zu halten, und zwar indem die Anzahl Übergänge von Becken zu Becken herabgesetzt werden, sowie mit der oben genannten Vermeidung der Oxigenierung in den anaeroben und anoxischen Phasen.

Diese und andere Zwecke sind mit dem vorliegenden Verfahren effektiv erreicht, wie klar aus der nachfolgenden als Beispiel gedachten und nicht limitierenden Beschreibung einer Phasenfolge in der Behandlung von Wasser hervorgeht, wie sie durch die Realisierung einer Anlage gemäß beiliegender Figur möglich wird.

Wie man aus dieser Figur ersieht, besteht die Anlage zur Verwirklichung des in Frage stehenden Verfahrens aus einem einzigen Klärbecken 10, das am Einlauf mit einem herkömmlichen primären Sedimentationsbecken 20 und am Ablauf mit einem herkömmlichen sekundären Sedimentationsbecken 30 verbunden wird.

Dem primären Sedimentationsbecken 20 wird das Abwasser durch eine Zuleitung 21 zugeführt und fließt durch die Leitung 22 in den biologischen Reaktor oder das Behandlungsbecken 10, nachdem der verdichtete Schlamm aus der Leitung 23 abgelassen wurde.

Dem sekundären Sedimentationsbecken 30 wird das trübe Wasser aus dem Reaktor oder dem Oxigenierungsbecken 10 über die Leitung 31 zugeführt, wo der verdichtete Schlamm durch die Leitung 33 abgelassen oder über die Leitung 34 dem Reaktor 10 zur Wiederverwertung zugeführt werden kann.

Das behandelte und geklärte Wasser fließt schließlich durch die Leitung 32 seiner Bestimmung entgegen.

Aus der obigen Beschreibung geht hervor, daß diese Kläranlage für die Behandlung der städtischen und industriellen Abwässer insoweit als herkömmlich bezeichnet werden kann, jedoch keine der für die Ausscheidung von Stickstoff und Phosphor erforderlichen Reaktionsschritte aufweist.

Damit in der Anlage auch alle Formen von Stickstoff und Phosphor ausgeschieden werden können, ohne auf das Schema des Vorgehens einzuwirken, wird der Reaktor 10, der in einer geeigneten Größe gebaut wird, um in einem einzigen Becken, gemäß einem vorbestimmten Ablauf, die Phasen der alternativ anaeroben, anoxischen und aeroben Behandlung durchzuführen, durch ein intelligentes Modul geschaltet, das alle Überwachungsdaten verarbeitet und sie mit den vorbestimmten Parametern vergleicht, um die verschiedenen Phasen zu steuern.

Unter Bezugnahme auf die beigelegte Zeichnung, kann die genannte Überwachung durch ein Thermometer 1, eine Sonde 2 zur Messung des Redoxpotentials, eine Sonde 3 für die Bestimmung des pH-Wertes, ein Meßgerät 4 für die Messung des im Wasser gelösten Sauerstoffes und ein Meßgerät 5 für die Messung des abfließenden CSB erfolgen.

Diese Geräte sind mit einer geeigneten elektronischen Datenverarbeitungsanlage 40 verbunden, die imstande ist, die eingehenden Daten zu lesen, zu kontrollieren und sie mit den programmierten Parametern zu vergleichen, um dann eine oder mehrere Einrichtungen 50 für die Zuführung von Luft oder reinen Sauerstoff in das einzige Becken oder in den Reaktor 10 zu betätigen.

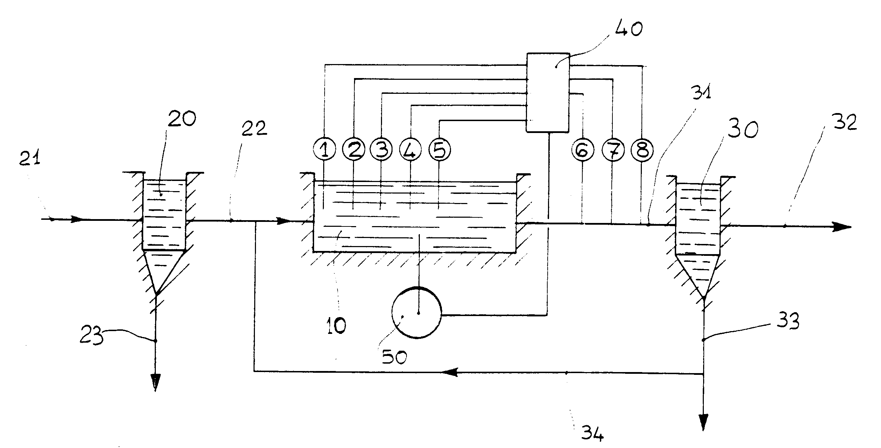

Dieselbe Datenverarbeitungsanlage 40 ist auch noch mit weiteren Meßgeräten verbunden, welche in der Zeichnung der Einfachheit halber auf die Leitung 31 aufgezeichnet sind, die aber in Wirklichkeit im Ablauf vom Reaktionsbecken 10 angebracht oder sogar als dem sekundären Sedimentationsbecken 30 nachgeschaltet anzusehen sind. Es sind dies der Trübheitsmesser 6, das Meßgerät 7 zur Messung der N-NO3 Konzentration und das Meßgerät für das N-NH4.

Nachdem nun die Hauptbestandteile der in der beigefügten Zeichnung dargestellten Kläranlage beschrieben worden sind, wird nachstehend die Phasenfolge zusammengefaßt, wie sie mit dieser Anlage ausgeführt werden kann und mit welcher das in Betracht gezogene neue Verfahren ermöglicht wird.

Es ist bekannt, daß man in den jetzigen Anlagen für die biologische Behandlung der städtischen und industriellen Abwässer eine anaerobe, anoxische und aerobe Phasenfolge hat, in welchen die heterotrophen und autotrophen Bakteriensorten eine Reihe von Reaktionen auf die Substrate ausüben, die aus a) löslichen bioabbaubaren kohlenstoffhaltigen Substanz und Partikeln, b) ammoniakalischem Stickstoff, c) löslichem organischem Stickstoff und Partikeln, d) organischen und anorganischen Phosphaten, e) Nitraten und Nitriten, f) Alkali bestehen.

Diese Phasen, die bei der jetzigen Technik separat in eigenen, getrennten, speziellen Becken durchgeführt werden, werden beim vorliegenden Verfahren in einem einzigen Becken 10 abgewickelt, und zwar mittels der oben genannten Meß-, Aufnahme und Steuergeräte.

Mit dem einzigen Becken 10 betreffen die von der mikrobiologischen Maße entwickelten Reaktionen im Wesentlichen vier grundsätzliche Prozesse bei drei verschieden Oxigenierungsgraden, welche sich in der zu klärenden Trübe abwechslungsweise abspielen und sie stufenweise vom löslichen aufgeteilten Schmutz und den Partikeln befreien. Die vier Phasen können wie folgt beschrieben werden:
Ein erster aerober Prozeß besteht in der Entfernung des kohlenstoffhaltigen Substrates mittels der heterotrophen Bakterien, sowie in der Umwandlung der Polyhydroxibutyrate, unter Bildung von intrazellularen Polyphosphaten;
Ein zweiter aerober Prozeß besteht in der Nitrifizierung, d.h. die Umwandlung von N-NH4 in N-NO3 mittels der autotrophen Bakterien;
Ein dritter anoxischer Prozeß besteht in der Denitrifizierung der stickstoffhaltigen Formen und ihre Umwandlung in gasförmigen Stickstoff, was mittels der heterotrophen Bakterien erfolgt;
Ein vierter anaerober Prozeß besteht in der Synthese von Polyhydroxibutyrat aus Polyphosphaten.

Es ist klar, daß sich die aeroben, anoxischen und anaeroben Phasen in der Reaktionsmasse durch die Zuführung von Sauerstoff abspielen, wobei deren exakte Zeitdauer vom Überwachungssystem gesteuert wird, das mit einfachen Zeitschaltern oder mit der Betriebslogik des Computers 40 verbunden ist.

Mit dem in Rede stehenden Verfahren kann man die Reaktionen der Sauerstoffreduktion maximal ausnutzen, die das Fundament der mikrobiologischen Prozesse sind und die von der Behandlung mit Einzelschlamm in einem einzigen Becken 10 begünstigt werden.

Die Beseitigung des organischen, bioabbaubaren Substrates erfolgt, wenn auch mit unterschiedlichen Geschwindigkeiten, unter allen Oxygenierungsbedingungen und in einem weiten Bereich von pH-Werten, während die Nitrifizierung alkalische Verhältnisse und genügend hohes Redoxpotential bedingt; die Denitrifizierung erfolgt bei niederem Redoxpotential und unter anoxischen Verhältnissen.

Das Redoxpotential ist hingegen nicht eng mit der Ausscheidung und der Kumulierung der Phosphate verbunden und bedingt eine Kontrolle mittels anderer Parameter.

Der Grund für die Kumulierung der Phosphate unter anoxischen Verhältnissen liegt im Unterschied zwischen der Ausscheidungskapazität der phosphorkumulierenden Bakterien, welche nicht in der Lage sind, die vorhandenen Nitrate auszunutzen, und der Kumulierungskapazität derselben Bakterien, welche in der Lage sind, die vorhandenen Nitrate als Elektronenakzeptoren bei der Oxydation des zufließenden Substrates zu benutzen.

Die Datenverarbeitungsanlage 40 erhält die Daten von den Kontrollgeräten und Meßinstrumenten von 1 bis 8, analysiert sie aufgrund der vorher festgelegten Parameter, unter Berücksichtigung der Erfahrungen, die bei den traditionellen Anlagen, bei jeder einzelnen neuen Anlage sowie in Laboratoriumsversuchen gemacht worden sind.

Das vorliegende Verfahren gestattet die Steuerung der Zeitdauer der Oxydationsphasen des kohlenstoffhaltigen Substrates, der Nitrifikation des ammoniakalischen Stickstoffes, der Denitrifizierung des Nitrat-Stickstoffes und des Freisetzens/Ausscheidens der Phosphate.

Gemäß einer ersten konstruktiven und verfahrensmäßigen Variante ist es bei Anwesenheit von Abwässern konstanter Qualität und Menge möglich, einen einfachen Zeitschalter zu verwenden, um das System der Zuführung von Luft und/oder Sauerstoff ein- und auszuschalten, so daß die Dauer der verschiedenen Behandlungsabläufe festgelegt wird, ohne einen Computer 40 einsetzen zu müssen.

Der automatisierte Zyklus wiederholt sich und paßt sich fortwährend den Änderungen der Konzentrationswerte der Verschmutzung der einlaufenden Abwässer an, selbständig die Qualität der Behandlung gewährleistend, gemäß dem vorliegenden Hauptzweck des vorgeschlagenen Verfahrens.

Mit diesem Verfahren ist es demnach möglich, Abwässer in einem einzigen Klärbecken oder biologischem Reaktor 10 zu behandeln, bei verringertem Platzbedarf und vereinfachtem Bauaufwand, folglich unter Herabsetzung der Bau- und Unterhaltskosten, gemäß einem anderen der bezeichneten Zwecke.

Weitere Kosten werden durch den Wegfall des Energiebedarfs für das Umfüllen von einem Becken in das andere erspart, womit auch die damit verbundenen Turbulenzen vermindert werden, welche Ausscheidungen von flüchtigen organischen Substanzen in die Umwelt zur Folge haben, womit ein weiterer der bezeichneten Zwecke erreicht wird.

Natürlich können die Phasenfolge, ihre Zeitdauer und ihre Einstellung den spezifischen realen Bedürfnissen angepaßt werden, so wie das vorliegende Verfahren auch an bestehende Anlagen angepaßt werden kann, mit der Zu- oder Abschaltung von Meß-, Kontroll- und Steuergeräten, ohne daß dies die Neuheit des zu schützenden Verfahrens beeinträchtigt.

## Patentansprüche

1. Verfahren zur Überwachung und Steuerung von Anlagen zur biologischen Behandlung von Abwässern, dadurch gekennzeichnet, daß die Anlage derart aufgebaut ist, daß die von der mikrobiologischen Masse hervorgerufenen Reaktionen, welche im Wesentlichen vier Grundprozesse betreffen, die bei drei verschiedenen Stufen von Oxigenierungsgraden, welche diese jeweils haben, ablaufen und die sich in der zu klärenden Trübe abwechseln und diese stufenweise von gelösten Verunreinigungen und Partikeln befreien, wobei die mikrobiologische Masse in einem einzigen Becken 10 enthalten ist.

2. Verfahren zur Überwachung und Steuerung von Anlagen zur biologischen Behandlung von Abwässern gemäß Anspruch 1, dadurch gekennzeichnet, daß es sich hauptsächlich auf die Ausnutzung der Redox-Reaktionen stützt, welche Ausgangspunkt für die mikrobiologischen Vorgänge sind und welche bevorzugt bei der Behandlung in einem einzigen Becken 10 stattfinden.

3. Verfahren zur Überwachung gemaß den Ansprüchen 1 und 2, dadurch gekennzeichnet, daß ein erster aerober Vorgang vorgesehen ist, welcher in der Abscheidung des kohlenstoffhaltigen Substrates mittels heterotropher Bakterien und der Umwandlung des Polyhydroxibutyrats unter Bildung von intrazellularen Polyphosphaten besteht.

4. Verfahren gemäß den Ansprüchen 1 bis 3, dadurch gekennzeichnet, daß ein zweiter aerober Vorgang vorgesehen ist, der in der Nitrifizierung mittels autotropher Bakterien besteht.

5. Verfahren gemäß den Ansprüchen 1 bis 4, dadurch gekennzeichnet, daß ein dritter anoxischer Vorgang vorgesehen ist, der in der Denitrifizierung der Stickstoffoxyde und deren Umwandlung in gasförmigen Stickstoff mittels heterotropher Bakterien besteht.

6. Verfahren gemäß den Ansprüchen 1 bis 5, dadurch gekennzeichnet, daß ein vierter anaerober Vorgang vorgesehen ist, welcher in der Synthese der Polyhydroxibutyrate aus Polyphosphaten besteht.

7. Verfahren zur Überwachung gemäß den Ansprüchen 1 und 2, dadurch gekennzeichnet, daß chemisch-physikalische Bezugsparameter vorgesehen sind, in erster Linie das Redoxpotential, wobei diese ständig von Meßgeräten kontrolliert werden, welche mit einer elektronischen Datenverarbeitungsanlage 40 in Verbindung stehen und die geeignet sind, die Daten in Aktionszeiten der Oxydationsphasen umzuwandeln, um dadurch als Zeitschalter für die Zuführung von Sauerstoff zu wirken.

8. Verfahren zur Überwachung gemäß dem Anspruch 7, dadurch gekennzeichnet, daß dieses mindestens mit einem Thermometer 1, einer Sonde 2 für die Bestimmung des Redoxpotentials, einer Sonde 3 für die Bestimmung des pH-Wertes, Meßgeräten 4 für den gelösten Sauerstoff und Meßgeräten 5 für den abfließenden CSB, ausgerüstet ist, wobei diese Geräte in einem einzigen Becken oder biologischen Reaktor 10 angebracht sind, und weiterhin mit Trübungsmeßgeräten 6, Meßgeräten 7 für die Konzentration N-NO3 und Meßgeräten 8 für N-NH4, welche dem biologischen Reaktor 10 nachgeschaltet sind.

9. Verfahren zur Überwachung und Steuerung von Anlagen zur Behandlung von Abwässern gemäß den Ansprüchen 1 bis 8, dadurch gekennzeichnet, daß die verschiedenen Sonden und Meßgeräte 1 bis 8 oder andere Instrumente zur Bestimmung von speziellen in einer bestimmten Anlage anwesenden Substanzen und andere Geräte mit einer elektronischen Datenverarbeitungsanlage verbunden werden können, welche die Daten aufnehmen, mit den vorprogrammierten Daten vergleichen und die Zuführung von Sauerstoff steuern kann, und zwar für die notwendigen aeroben, anoxischen und anaeroben Phasen der vier in den Ansprüchen 3 bis 6 vorgenannten Prozesse und wie es als wesentlich für die genannten Zwecke beschrieben und gezeichnet worden ist.
